(19) Europäisches Patentamt
European Patent Office
Office européen des brevets

(11) Veröffentlichungsnummer: **0 517 086 A2**

## (12) EUROPÄISCHE PATENTANMELDUNG

(21) Anmeldenummer: **92108918.1**

(22) Anmeldetag: **27.05.92**

(51) Int. Cl.⁵: **B23Q 3/155**, B23Q 7/04

(30) Priorität: **30.05.91 DE 4117702**

(43) Veröffentlichungstag der Anmeldung:
**09.12.92 Patentblatt 92/50**

(84) Benannte Vertragsstaaten:
**CH DE ES FR GB IT LI**

(71) Anmelder: **CHIRON-WERKE GMBH & CO. KG**
**Talstrasse 23**
**W-7200 Tuttlingen(DE)**

(72) Erfinder: **Grund, Peter**
**Bergblickstrasse 13**
**W-8959 Rieden a.F.(DE)**
Erfinder: **Markutzik, Hans-Joachim**
**Gronostrasse 4**
**W-7760 Radolfzell 14(DE)**

(74) Vertreter: **Witte, Alexander, Dr.-Ing. et al**
**Augustenstrasse 7**
**W-7000 Stuttgart 1(DE)**

(54) **Verfahren und Vorrichtung zum Wechseln von Werkzeugen an einer Werkzeugmaschine.**

(57) Ein Verfahren und eine Vorrichtung dienen zum Wechseln von Werkzeugen (15) in einer Aufnahme (13) einer Spindel (12) einer Werkzeugmaschine (10). Ein erster Greifer (20b) eines motorisch angetriebenen und endlagengedämpften ersten Werkzeugwechslers (21b) entnimmt ein erstes Werkzeug (15b) aus der Aufnahme (13). Ein zweiter Greifer (20a) eines motorisch angetriebenen und endlagengedämpften zweiten Werkzeugwechslers (21a) setzt ein Zweites Werkzeug (15a) mit einem zum ersten Bewegungsablauf des ersten Werkzeugwechslers (21b) gegenläufigen zweiten Bewegungsablauf in die Aufnahme (13) ein. Der Beginn des zweiten Bewegungsablaufs steht in einer vorbestimmten zeitlichen Beziehung zur Beendigung des ersten Bewegungsablaufs. Der zweite Bewegungsablauf beginnt nämlich um ein vorbestimmtes Zeitintervall vor der Beendigung des ersten Bewegungsablaufs. Hierzu sind die Werkzeugwechsler (21a, 21b) mit Sensoren (25a, 25b) versehen, die zwischen den bewegten und den festen Elementen der Werkzeugwechsler (21a, 21b) wirken und um eine vorbestimmte Strecke vor dem Erreichen einer von der Aufnahme (13) abgewandten Endstellung der bewegten Elemente ansprechen.

Fig. 1

Die Erfindung betrifft ein Verfahren zum Wechseln von Werkzeugen in einer Aufnahme einer Spindel in einer Werkzeugmaschine, bei der mindestens ein Greifer eines motorisch angetriebenen und endlagengedämpften Werkzeugwechslers ein Werkzeug aus der Aufnahme entnimmt bzw. in diese einsetzt, wobei Steuersignale für die Bewegungsabläufe des Werkzeugwechslers und/oder für eine Bearbeitung eines Werkstücks in Abhängigkeit vom Erreichen von Endlagen des Werkzeugwechslers erzeugt werden.

Die Erfindung betrifft ferner ein Verfahren zum Wechseln von Werkzeugen in einer Aufnahme einer Spindel einer Werkzeugmaschine, bei der ein erster Greifer eines motorisch angetriebenen und endlagengedämpften ersten Werkzeugwechslers ein erstes Werkzeug aus der Aufnahme entnimmt und ein zweiter Greifer eines motorisch angetriebenen und endlagengedämpften zweiten Werkzeugwechslers ein zweites Werkzeug mit einem zum ersten Bewegungsablauf des ersten Werkzeugwechslers gegenläufigen zweiten Bewegungsablauf in die Aufnahme einsetzt, wobei der Beginn des zweiten Bewegungsablaufs in einer vorbestimmten zeitlichen Beziehung zur Beendigung des ersten Bewegungsablaufs steht.

Die Erfindung betrifft weiterhin eine Vorrichtung zum Wechseln von Werkzeugen in einer Aufnahme einer Spindel einer Werkzeugmaschine, bei der mindestens ein Greifer eines motorisch angetriebenen und endlagengedämpften Werkzeugwechslers ein Werkzeug aus der Aufnahme entnimmt bzw. in diese einsetzt, wobei Steuersignale für die Bewegungsabläufe des Werkzeugwechslers und/oder für eine Bearbeitung eines Werkstücks in Abhängigkeit vom Erreichen von Endlagen des Werkzeugwechslers erzeugt werden.

Die Erfindung betrifft schließlich eine Vorrichtung zum Wechseln von Werkzeugen in einer Aufnahme einer Spindel einer Werkzeugmaschine, bei der ein erster Greifer eines motorisch angetriebenen und endlagengedämpften ersten Werkzeugwechslers ein erstes Werkzeug aus der Aufnahme entnimmt und ein zweiter Greifer eines motorisch angetriebenen und endlagengedämpften zweiten Werkzeugwechslers ein zweites Werkzeug mit einem zum ersten Bewegungsablauf des ersten Werkzeugwechslers gegenläufigen zweiten Bewegungsablauf in die Aufnahme einsetzt, wobei der Beginn des zweiten Bewegungsablaufs in einer vorbestimmten zeitlichen Beziehung zur Beendigung des ersten Bewegungsablaufs steht.

Eine Vorrichtung der vorstehend genannten Art ist aus der DE-PS 32 33 934 bekannt. Die bekannte Vorrichtung ist ferner zur Durchführung des eingangs genannten Verfahrens geeignet.

Die aus der DE-PS 32 33 934 bekannte Werkzeugmaschine arbeitet wie folgt:

Die bekannte Werkzeugmaschine ist mit einem vertikalachsigen Spindelstock versehen, an dessen Unterseite sich eine ebenfalls vertikalachsige Aufnahme für Werkzeuge befindet. Um den Spindelstock herum ist eine Mehrzahl von Werkzeugwechslern angeordnet. Die Werkzeugwechsler umfassen jeweils ein Gestänge, das mittels einer pneumatischen Kolben-Zylinder-Einheit betätigbar ist. Am unteren Ende des Gestänges befindet sich ein Greifer, in dem einzelne Werkzeuge bzw. Werkzeughalter permanent gehalten sind. Hierzu sind die Greifer mit einem Drehlager ausgebildet, so daß die Werkzeuge sich in dem Greifer drehen können und die Greifer demzufolge auch am Werkzeug verbleiben können, wenn sich das Werkzeug in der rotierenden Spindel der Werkzeugmaschine befindet.

Die Werkzeugwechsler der bekannten Werkzeugmaschine arbeiten im Gegentaktbetrieb. Dies bedeutet, daß während eines bestimmten Bearbeitungsvorganges einer der Werkzeugwechsler mit seinem Greifer ein bestimmtes Werkzeug in der Aufnahme der Spindel hälte, während sich die Spindel dreht und das Werkzeug einen bestimmten Bearbeitungsschritt am Werkstück ausführt. Sobald dieser Bearbeitungsschritt abgeschlossen ist, wird der Antriebsmotor der Spindel zum Stillstand abgebremst. Sobald das Werkzeug stillsteht, wird es mittels einer geeigneten Vorrichtung aus der Aufnahme ausgestoßen und kann nun durch relatives Verfahren von Spindelstock und Werkzeugwechslern in vertikaler Richtung zueinander nach unten aus der Aufnahme der Spindel ausgefahren werden.

Durch Betätigung der pneumatischen Kolben-Zylinder-Einheit des zugehörigen Werkzeugwechslers wird nun das Werkzeug zunächst radial nach außen und dann in vertikaler Richtung nach oben befördert, um schließlich in eine nach oben von der Spindelaufnahme beabstandete Magazinstellung zu gelangen.

Sobald der genannte Werkzeugwechsler die obere Endstellung erreicht hat, wird ein Endlagensensor betätigt. Die Betätigung des Endlagensensors bewirkt, daß ein zweiter Werkzeugwechsler einen gegenläufigen Bewegungsablauf beginnt, indem ein neues Werkzeug aus einer oberen Magazinstellung zunächst nach unten und dann in radialer Richtung zur Spindelachse hin und schließlich nach oben in die Aufnahme der Spindel hineinbefördert wird. Sobald das neue Werkzeug in die Aufnahme der Spindel eingesetzt und dort hineingezogen wurde, wird der Spindelmotor wieder eingeschaltet, und es kann ein nächster Bearbeitungsschritt beginnen.

Bei der bekannten Werkzeugmaschine sind die zahlreichen um die Spindel herum angeordneten Werkzeugwechsler auf einer gemeinsamen Hülse angeordnet, die auf dem Spindelstock in vertikaler Richtung relativ zu diesem verschiebbar ist. Hierzu dient eine weitere pneumatische Kolben-Zylinder-Einheit.

Das gemeinsame Verfahren sämtlicher Werkzeugwechsler relativ zur Spindel hat u.a. den Sinn, den letzten Schritt des Einfahrens bzw. Ausfahrens eines Werkzeugs aus der Aufnahme bzw. in die Aufnahme zu bewerkstelligen.

Wenn beim Einsetzen eines neuen Werkzeugs die Hülse mit sämtlichen Werkzeugwechslern nach oben fährt, um die letzte Einfahrstrecke für das Werkzeug zu durchmessen, so wird die pneumatische Kolben-Zylinder-Einheit entsprechend betätigt. Wenn das eingefahrene Werkzeug seine obere Endstellung erreicht hat, wird ein entsprechendes Signal erzeugt und die CNC-Steuerung der Werkzeugmaschine "freigegeben", was bedeutet, daß nunmehr der Bearbeitungsprozeß beginnen kann, weil der CNC-Steuerung mitgeteilt wurde, daß sich das Werkzeug ordnungsgemäß in eingezogener Stellung in der Spindelaufnahme befindet.

Bei pneumatischen Kolben-Zylinder-Einheiten ist es wie bei vielen anderen Bewegungseinheiten erforderlich, daß infolge der gewünschten hohen Verfahrgeschwindigkeit eine Endlagendämpfung vorgesehen wird. Hierunter versteht man, daß die bewegten Elemente kurz vor Erreichen der Endstellung abgebremst werden, damit eine mechanische Überlastung bei Erreichen der Endstellung verhindert wird. Diese Endlagendämpfung betrifft zwar nur einen geringen Teil des räumlichen Bewegungsablaufes, kann jedoch je nach Einzelfall einen beträchtlichen Anteil des gesamten zeitlichen Ablaufes ausmachen.

Der Erfindung liegt die Aufgabe zugrunde, ein Verfahren und eine Vorrichtung der eingangs genannten Art dahingehend weiterzubilden, daß die Werkzeugwechselzeiten weiter vermindert werden.

Gemäß dem eingangs als erstes genannten Verfahren wird die der Erfindung zugrundeliegende Aufgabe dadurch gelöst, daß die Steuersignale um ein vorbestimmtes Intervall vor Erreichen der Endstellung erzeugt werden.

Gemäß dem eingangs als zweites genannten Verfahren wird die der Erfindung zugrundeliegende Aufgabe dadurch gelöst, daß der zweite Bewegungsablauf um ein vorbestimmtes Zeitintervall vor der Beendigung des ersten Bewegungsablaufs beginnt.

Gemäß der eingangs als erste genannten Vorrichtung wird die der Erfindung zugrundeliegende Aufgabe dadurch gelöst, daß zwischen den bewegten und den festen Elementen der Werkzeugwechsler bzw. der Spindel wirkende Sensoren vorgesehen sind, die um ein vorbestimmtes Wegintervall vor dem Erreichen der Endstellung ansprechen.

Gemäß der eingangs als zweite genannten Vorrichtung wird die der Erfindung zugrundeliegende Aufgabe dadurch gelöst, daß die Werkzeugwechsler mit Sensoren versehen sind, die zwischen den bewegten und den festen Elementen der Werkzeugwechsler wirken und um eine vorbestimmte Strecke vor dem Erreichen einer von der Aufnahme abgewandten Endstellung der bewegten Elemente ansprechen.

Die der Erfindung zugrundeliegende Aufgabe wird auf beide Weisen vollkommen gelöst.

Durch die genannten Merkmale wird nämlich erreicht, daß der Dämpfungsvorgang kurz vor dem Erreichen der Endlagen nicht mehr erhöhend für die Werkzeugwechselzeiten wirkt, weil der gegenläufige zweite Bewegungsablauf gestartet wird, bevor der Vorgang der Endlagendämpfung abläuft.

Da andererseits der Vorgang der Endlagendämpfung zwar nur einen sehr geringen Anteil des räumlichen Bewegungsablaufs, jedoch einen merklichen Anteil des zeitlichen Bewegungsablaufs ausmacht, wird auf diese Weise eine deutliche Reduzierung der Werkzeugwechselzeiten erreicht. Man muß sich dabei vor Augen halten, daß bei modernen Bearbeitungszentren die Werkzeugwechselzeiten im Sekundenbereich liegen und daher schon Sekundenbruchteile erhebliche Vorteile bringen. Dies gilt umso mehr deswegen, weil bei modernen Bearbeitungszentren, die unter numerischer Steuerung eine Vielzahl von Bearbeitungsschritten nacheinander ausführen, sich bereits geringste Verkürzungen der Werkzeugwechselzeiten insgesamt bemerkbar machen, da sich diese Verkürzungen insgesamt merklich addieren.

Die Erfindung kann bei allen für den Werkzeugwechsel betätigten Einheiten eingesetzt werden, d.h. sowohl bei den einzelnen Werkzeugwechslern wie auch im Zusammenhang mit dem Verfahren einer sämtliche Werkzeugwechsler tragenden Hülse. Dabei können sowohl Zeitintervalle wie auch Wegintervalle ausgewertet werden.

Bei bevorzugten Ausführungsbeispielen der Erfindung entspricht das Zeitintervall bzw. die Strecke einem Anteil von 0,1 bis 5 %, vorzugsweise 0,5 % bis 1 % der räumlichen Bewegungsbahn des ersten Bewegungsablaufs.

Diese Maßnahme stellt einen optimalen Kompromiß zwischen der einerseits erforderlichen Endlagendämpfung und andererseits den tolerierbaren Überschneidungen der Bewegungsabläufe dar.

Die Erfindung läßt sich mit besonderen Vorteil bei solchen Werkzeugmaschinen einsetzen, bei denen die Werkzeugwechsler mittels pneumatischer Kolben-Zylinder-Einheiten bewegt werden, weil derartige Einheiten in besonderem Maße einer Endlagendämpfung bedürfen.

Wenn bei einer bestimmten Werkzeugmaschine zahlreiche Werkzeugwechsler eng nebeneinander um die Spindel herum angeordnet sind, so kann es vorteilhaft sein, wenn die Synchronisierung der Bewegungsabläufe differenziert wird, je nachdem, ob nacheinander benachbarte oder nicht-benachbarte Werkzeugwechsler aktiviert werden. Im Falle von benachbarten Werkzeugwechslern kann es zweckmäßig sein, an der herkömmlichen Synchronisierung festzuhalten, bei der zunächst der erste Werkzeugwechsler seinen Bewegungsablauf vollkommen ausführt, ehe dann der zweite Werkzeugwechsler startet, da bei benachbarten Werkzeugwechslern die Gefahr von Kollisionen naturgemäß besonders groß ist. Sind die Werkzeugwechsler indes nicht benachbart, so kann zur Verkürzung der Werkzeugwechselzeiten die bereits beschriebene Synchronisierung eingesetzt werden, bei der sich die Bewegungsabläufe zeitlich überlappen oder noch mehr überlappen, als dies bei herkömmlichen Synchronisierungen der Fall ist.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1 eine äußerst schematisierte Seitenansicht eines Spindelstocks einer erfindungsgemäßen Werkzeugmaschine, wie er zur Durchführung des erfindungsgemäßen Verfahrens geeignet ist;

Fig. 2 eine Darstellung, ähnlich Fig. 1, jedoch für eine weitere Phase des Bewegungsablaufs beim Werkzeugwechsel;

Fig. 3 eine weitere Darstellung, ähnlich den Fig. 1 und 2, für noch eine weitere Phase des Bewegungsablaufs beim Werkzeugwechsel.

In den Figuren bezeichnet 10 insgesamt eine Werkzeugmaschine, vorzugsweise ein vertikalachsiges Bearbeitungszentrum, mit dem beispielsweise Bohr- und Fräsarbeiten unter numerischer Steuerung durchgeführt werden können.

Einzelheiten der in den Figuren dargestellten Werkzeugmaschine 10 können der eingangs genannten DE-PS 32 33 934 entnommen werden, deren Offenbarungsgehalt durch diese Bezugnahme ausdrücklich zum Offenbarungsgehalt auch der vorliegenden Anmeldung gemacht wird.

Die Werkzeugmaschine 10 hat einen vertikalachsigen Spindelstock 11 mit einer Spindel 12, die nach unten in eine Aufnahme 13 übergeht.

Mit 14 ist im Bereich der Aufnahme 13 äußerst schematisch eine Ausstoßvorrichtung angedeutet, mit der ein Werkzeug 15 aus der Aufnahme 13 ausgestoßen werden kann.

In den Figuren ist die jeweils linke und die jeweils rechte Hälfte zu beiden Seiten des Spindelstocks 11 mit an sich baugleichen Elementen versehen, die jeweils mit denselben Bezugzeichen bezeichnet sind und nur durch ein hinzugefügtes "a" bzw. "b" voneinander unterschieden werden.

Eine Antriebsverbindung 16 führt von der drehbaren Aufnahme 13 zu einem Antriebsmotor 17 der Spindel 12. Mit 18 ist eine Steuerleitung angedeutet, vermittels derer der Antriebsmotor 17 ein- und ausgeschaltet bzw. in seiner Drehzahl geregelt werden kann, wie dies an sich bekannt ist.

Um den Spindelstock 11 herum ist eine Mehrzahl von Werkzeugwechslern angedeutet, von denen in den Figuren jeweils nur zwei dargestellt sind.

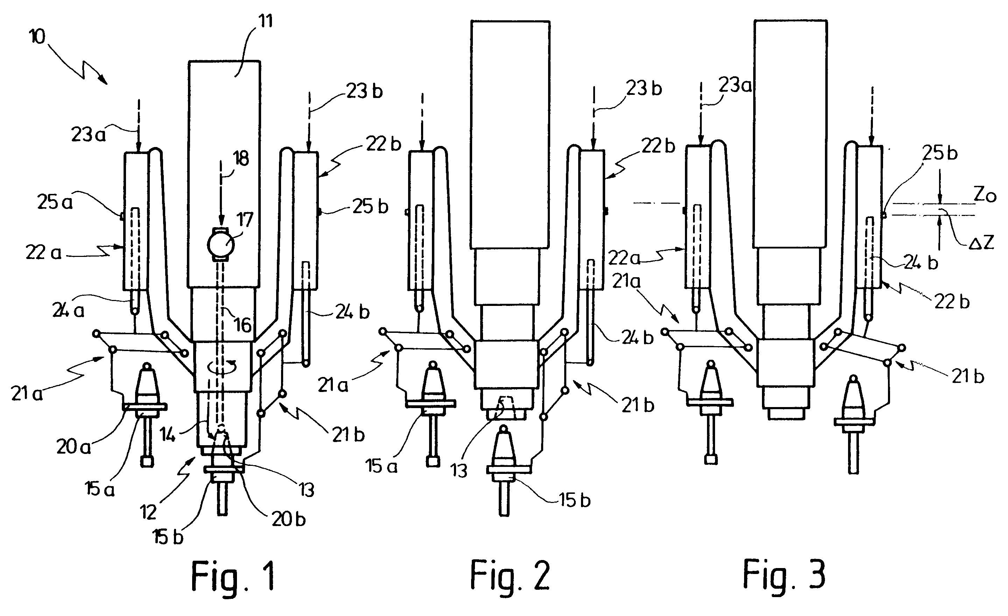

Greifer 20a, 20b dienen zum Halten der Werkzeuge 15a, 15b in einer Weise, daß sich die Werkzeuge 15a, 15b in den Greifern 20a, 20b zu drehen vermögen. Die Greifer 20a, 20b können somit an den Werkzeugen 15a, 15b verbleiben, während sich diese in der Aufnahme 13 der Spindel 12 befinden und rotieren. Dies ist in Fig. 1 mit dem Greifer 20b angedeutet, der das Werkzeug 15b in der Aufnahme 13 hält, in die das Werkzeug 15b eingezogen ist.

Die Greifer 20a, 20b sind das jeweils unterste Glied eines Werkzeugwechslers 21a, 21b. Die Werkzeugwechsler 21a, 21b werden über ein in den Figuren nur schematisch dargestelltes Parallelogramm-Gestänge betätigt, und zwar mittels pneumatischen Kolben-Zylinder-Einheiten 22a, 22b, die wiederum über Steuerleitungen 23a, 23b betätigbar sind. Mit 24a, 24b sind die entsprechenden Kolben angedeutet. Die Kolben 24a, 24b stehen dabei beispielhaft für die bewegten Teile der Werkzeugwechsler 21a, 21b. Die Kolben 24a, 24b arbeiten mit in den Figuren nicht dargestellten Endlagensensoren zusammen, um die jeweils untere bzw. obere Endlage der Werkzeugwechsler 21a, 21b feststellen zu können. Mit 25a, 25b sind jeweils dritte Sensoren bezeichnet, auf deren Funktion weiter unten noch eingegangen wird.

Die Werkzeugmaschine 10 arbeitet wie folgt:
In Fig. 1 ist die Ausgangssituation dargestellt, in der das Werkzeug 15b sich in der Aufnahme 13 der Spindel 20 befindet und dort gedreht wird, um ein nicht dargestelltes Werkstück zu bearbeiten. Der zugehörige Werkzeugwechsler 21b befindet sich dabei in seiner nach unten ausgefahrenen Stellung. Demgegenüber ist der in Fig. 1 linke Werkzeugwechsler 21a in seiner oberen Endstellung, in der das Werkzeug 15a seine Magazinstellung einnimmt.

Es wurde bereits erwähnt, daß der Greifer 20b des Werkzeugwechslers 21b so beschaffen ist, daß er an dem in der Aufnahme 13 rotierenden Werkzeug 15b verbleibt.

In der in Fig. 1 dargestellten eingezogenen Stellung befindet sich das Werkzeug 15b mit seinem genormten Kegel in einer eingezogenen Stellung innerhalb der Aufnahme 13.

Wenn nun der Bearbeitungsvorgang am Werkstück abgeschlossen ist und das Werkzeug 15b ausgewechselt werden soll, so wird über die Steuerleitung 18 ein Abschaltsignal an den Antriebsmotor 17 gegeben.

Die Drehzahl des Antriebsmotors 17 wird dabei überwacht, indem entweder diese Drehzahl unmittelbar gemessen oder eine Zeit definiert wird, innerhalb der der Antriebsmotor 17 bei frei drehbarem Werkzeug 15b normalerweise zum Stillstand abgebremst wird.

Unabhängig davon, wie die Drehzahlüberwachung des Antriebsmotors 17 nun im einzelnen vorgenommen wird, geht ein Steuersignal an die Ausstoßvorrichtung 14, bevor der Antriebsmotor 17 zum Stillstand abgebremst wurde. Vorzugsweise geschieht dies bei einer Drehzahl im Bereich von 100 bis 700 $min^{-1}$, insbesondere bei einer Drehzahl von 500 $min^{-1}$.

Während das Werkzeug 15b sich somit noch mit dieser Auslaufdrehzahl dreht, wird es bereits durch Betätigung der Ausstoßvorrichtung 14 aus der Aufnahme 13 nach unten ausgestoßen. Der Greifer 20b des Werkzeugwechslers 21b muß somit das sich noch drehende und auslaufende Werkzeug 15b auffangen, was jedoch ohne weiteres möglich ist, da das Werkzeug 15b mittels einer Drehhalterung im Greifer 20b gehalten wird.

Wie aus Fig. 2 zu entnehmen ist, werden nun die in vertikaler Richtung starr miteinander verbundenen Werkzeugwechsler 21a, 21b in an sich bekannter Weise gemeinsam nach unten verfahren, bis das Werkzeug 15b vollkommen nach unten aus der Aufnahme 13 herausgelangt ist. Das neue Werkzeug 15a wird auf diese Weise gleichzeitig geringfügig nach unten in den Bereich der Aufnahme 13 heranbewegt.

Durch Betätigen der Steuerleitung 23b wird nun die Kolben-Zylinder-Einheit 22b des Werkzeugwechslers 21b betätigt, mit der Folge, daß der Kolben 24b bzw. die Kolbenstange nach oben eingezogen werden. Durch das Parallelogramm-Gestänge wird gleichzeitig in an sich bekannter Weise erreicht, daß das Werkzeug 15b zunächst radial nach rechts von der Achse der Spindel 20 weg nach rechts geschwenkt und dann anschließend nach oben eingezogen wird.

Fig. 3 zeigt die nächste Phase des Bewegungsvorganges, in dem der Werkzeugwechsler 21b nahezu die obere Endstellung erreicht hat, die in Fig. 3 mit $z_0$ bezeichnet ist. Der räumliche Abstand, den das obere Ende der Kolbenstange 24b noch von der Endstellung $z_0$ hat, ist in Fig. 3 mit $\Delta z$ bezeichnet. Bei Erreichen dieses Abstandes $\Delta z$ von der Endstellung $z_0$ wird der Sensor 25b angesteuert, der in Zusammenwirken mit der Kolbenstange 24b oder einem anderen bewegten Element des Werkzeugwechslers 21b entsprechend positioniert wurde.

Wenn der Sensor 25b anspricht, wird synchron ein Steuerbefehl auf die Steuerleitung 23a gegeben, um die linke Kolben-Zylinder-Einheit 22a des Werkzeugwechslers 21a in Betrieb zu setzen.

Dies hat zur Folge, daß die Endlagendämpfung der Kolben-Zylinder-Einheit 22b, die auf der Reststrecke $\Delta z$ wirksam wird, ablaufen kann, während sich andererseits der linke Werkzeugwechsler 21a bereits in Aktion befindet.

Bei einem praktischen Ausführungsbeispiel liegt die Länge der Kolben-Zylinder-Einheit in der Größenordnung von 1 m; die Reststrecke $\Delta z$ beträgt beispielsweise zwischen 5 und 10 mm.

Durch die beiden vorstehend ausführlich erläuterten Maßnahmen, nämlich zum einen das Ausstoßen des Werkzeugs aus der Spindelaufnahme vor Erreichen des Stillstandes des Antriebsmotors und zum anderen das Starten des jeweils neuen Werkzeugwechslers vor Erreichen der Endstellung des alten Werkzeugwechslers bringt eine erhebliche Verkürzung der Werkzeugwechselzeiten mit sich.

Die vorstehend beschriebene Wirkungsweise orientierte sich an dem Beispiel, daß die Erfindung an einzelnen Werkzeugwechslern eingesetzt wird.

Selbstverständlich kann die Erfindung aber auch dann eingesetzt werden, wenn sich die Werkzeugwechsler auf einer gemeinsamen Hülse befinden, wie dies insbesondere aus Fig. 2 und 3 ersichtlich wird. In diesem Falle kann der Sensor mit der Hülse bzw. der Spindel zusammenarbeiten, um das Erreichen der Endlage der Hülse zu erkennen.

Wie man nämlich deutlich durch einen Vergleich der Fig. 1 und 2 erkennen kann, wird das Ausfahren der Werkzeuge 15 aus der Aufnahme 13 dadurch erreicht, daß die genannte Hülse mit sämtlichen Werkzeugwechslern nach unten verschoben wird, damit die Werkzeugkegel die Aufnahme 13 freigeben.

In entsprechender Weise wird beim Einsetzen eines neuen Werkzeuges eine gegenläufige Bewegung ausgeführt, um das neue Werkzeug mit seinem Kegel in die Aufnahme 13 einzusetzen.

Wenn dann die Hülse wieder nach oben fährt, so wird bei herkömmlichen Werkzeugmaschinen ein Endschalter bei Erreichen der Endstellung betätigt, um der CNC-Steuerung der Werkzeugmaschine zu signalisieren, daß sich das neue Werkzeug in der vorgeschriebenen Position befindet und somit der Bearbeitungsvorgang beginnen kann.

Um die sich dabei einstellende Zeitverzögerung infolge der Endlagendämpfung der Kolben-Zylinder-Einheit der Hülse zu vermindern, kann auch in diesem Falle bereits kurz vor Erreichen der Endstellung ein entsprechend positionierter Sensor betätigt werden, der der CNC-Steuerung das Erreichen der Endstellung signalisiert, obwohl diese in der Realität noch nicht vollkommen erreicht ist. Da vom Eingehen dieses Steuersignals bis zum Aktivieren des Antriebes und der Verfahreinheiten für den Bearbeitungsvorgang auch gewisse Verzögerungszeiten eintreten, ist es unschädlich, wenn das Steuersignal bereits ausgeschickt wird, ehe das neue Werkzeug seine Endstellung in der Aufnahme 13 erreicht hat.

**Patentansprüche**

1. Verfahren zum Wechseln von Werkzeugen (15) in einer Aufnahme (13) einer Spindel (12) einer Werkzeugmaschine (10), bei der mindestens ein Greifer (20) eines motorisch angetriebenen und endlagengedämpften Werkzeugwechslers (21) ein Werkzeug (15) aus der Aufnahme (13) entnimmt bzw. in diese einsetzt, wobei Steuersignale für die Bewegungsabläufe des Werkzeugwechslers (21) und/oder für eine Bearbeitung eines Werkstücks in Abhängigkeit vom Erreichen von Endlagen des Werkzeugwechslers (21) erzeugt werden, dadurch gekennzeichnet, daß die Steuersignale um ein vorbestimmtes Intervall ($\Delta z$) vor Erreichen der Endstellung ($z_0$) erzeugt werden.

2. Verfahren nach Anspruch 1, dadurch gekennzeichnet, daß die Steuersignale um ein vorbestimmtes Wegintervall ($\Delta z$) vor Erreichen der Endstellung ($z_0$) erzeugt werden.

3. Verfahren nach Anspruch 2, dadurch gekennzeichnet, daß das Wegintervall dem Einsatz der Endlagendämpfung entspricht.

4. Verfahren nach Anspruch 1, dadurch gekennzeichnet, daß die Steuersignale um ein vorbestimmtes Zeitintervall vor Erreichen der Endlage erzeugt werden.

5. Verfahren nach Anspruch 4, dadurch gekennzeichnet, daß das Zeitintervall einem Anteil von 0,1 bis 5 %, vorzugsweise 0,5 % bis 1 % der räumlichen Bewegungsbahn des jeweiligen Bewegungsablaufs entspricht.

6. Verfahren nach einem oder mehreren der Ansprüche 1 bis 5, dadurch gekennzeichnet, daß die Endstellung ($z_0$) die Endstellung ($z_0$) eines einzelnen Werkzeugwechslers (21) ist.

7. Verfahren nach einem oder mehreren der Ansprüche 1 bis 5, dadurch gekennzeichnet, daß die Endstellung ($z_0$) die Endstellung ($z_0$) eines mehrere Werkzeugwechsler (21a, 21b) tragenden Elementes ist, das relativ zur Spindel (12) verschiebbar ist, das relativ zur Spindel (12) verschiebbar ist.

8. Verfahren, insbesondere nach einem oder mehreren der Ansprüche 1 bis 7, zum Wechseln von Werkzeugen (15) in einer Aufnahme (13) einer Spindel (12) einer Werkzeugmaschine (10), bei der ein erster Greifer (20b) eines motorisch angetriebenen und endlagengedämpften ersten Werkzeugwechslers (21b) ein erstes Werkzeug (15b) aus der Aufnahme (13) entnimmt und ein zweiter Greifer (20a) eines motorisch angetriebenen und endlagengedämpften zweiten Werkzeugwechslers (21a) ein zweites Werkzeug (15a) mit einem zum ersten Bewegungsablauf des ersten Werkzeugwechslers (21b) gegenläufigen zweiten Bewegungsablauf in die Aufnahme (13) einsetzt, wobei der Beginn des zweiten Bewegungsablaufs in einer vorbestimmten zeitlichen Beziehung zum ersten Bewegungsablaufs steht, dadurch gekennzeichnet, daß der zweite Bewegungsablauf um ein vorbestimmtes Zeitintervall vor der Beendigung des ersten Bewegungsablaufs gestartet wird.

9. Verfahren nach Anspruch 8, dadurch gekennzeichnet, daß der zweite Bewegungsablauf gestartet wird, wenn der erste Werkzeugwechsler (21a) den Zugang zur Aufnahme (13) freigemacht hat.

10. Verfahren nach Anspruch 9, dadurch gekennzeichnet, daß bei mindestens drei Werkzeugwechslern der zweite Bewegungsablauf bei benachbartem erstem und zweitem Werkzeugwechsler gestartet wird, wenn der erste Werkzeugwechsler mindestens näherungsweise seine von der Aufnahme beabstandete Endstellung erreicht hat, während bei nicht-benachbartem erstem und zweitem Werkzeugwechsler der zweite Bewegungsablauf gestartet wird, wenn der erste Werkzeugwechsler den Zugang zur Aufnahme freigemacht hat.

11. Vorrichtung zum Wechseln von Werkzeugen (15) in einer Aufnahme (13) einer Spindel (12) einer Werkzeugmaschine (10), bei der mindestens ein Greifer (20) eines motorisch angetriebenen und endlagengedämpften Werkzeugwechslers (21) ein Werkzeug (15) aus der Aufnahme (13) entnimmt bzw. in diese einsetzt, wobei Steuersignale für die Bewegungsabläufe des Werkzeugwechslers (21) und/oder für eine Bearbeitung eines Werkstücks in Abhängigkeit vom Erreichen von Endlagen des Werkzeugwechslers (21) erzeugt werden, dadurch gekennzeichnet, daß zwischen den bewegten und den festen Elementen der Werkzeugwechsler (21) bzw. der Spindel (12) wirkende Sensoren (25a, 25b) vorgesehen sind, die um ein vorbestimmtes Wegintervall ($\Delta z$) vor dem Erreichen der Endstellung (70) ansprechen.

12. Vorrichtung nach Anspruch 11, dadurch gekennzeichnet, daß das Wegintervall dem Einsatz der Endlagendämpfung entspricht.

13. Vorrichtung nach Anspruch 11 oder 12, dadurch gekennzeichnet, daß die Strecke ($\Delta z$) einem Anteil von 0,1 bis 5 %, vorzugsweise 0,5 % bis 1 % der räumlichen Bewegungsbahn eines jeweiligen Bewegungsablaufs entspricht.

14. Vorrichtung nach einem oder mehreren der Ansprüche 11 bis 13, dadurch gekennzeichnet, daß die Endstellung ($z_0$) die Endstellung ($z_0$) eines einzelnen Werkzeugwechslers (21) ist.

15. Vorrichtung nach einem oder mehreren der Ansprüche 11 bis 13, dadurch gekennzeichnet, daß die Endstellung ($z_0$) die Endstellung ($z_0$) eines mehrere Werkzeugwechsler (21a, 21b) tragenden Elementes ist, das relativ zur Spindel (12) verschiebbar ist.

16. Vorrichtung, insbesondere nach einem oder mehreren der Ansprüche 11 bis 15, zum Wechseln von Werkzeugen (15) in einer Aufnahme (13) einer Spindel (12) einer Werkzeugmaschine (10), bei der ein erster Greifer (20b) eines motorisch angetriebenen und endlagengedämpften ersten Werkzeugwechslers (21b) ein erstes Werkzeug (15b) aus der Aufnahme (13) entnimmt und ein zweiter Greifer (20a) eines motorisch angetriebenen und endlagengedämpften zweiten Werkzeugwechslers (21a) ein zweites Werkzeug (15a) mit einem zum ersten Bewegungsablauf des ersten Werkzeugwechslers (21b) gegenläufigen zweiten Bewegungsablauf in die Aufnahme (13) einsetzt, wobei der Beginn des zweiten Bewegungsablaufs in einer vorbestimmten zeitlichen Beziehung zur Beendigung des ersten Bewegungsablaufs steht, dadurch gekennzeichnet, daß die Werkzeugwechsler (21a, 21b) mit Sensoren (25a, 25b) versehen sind, die zwischen den bewegten und den festen Elementen der Werkzeugwechsler (21a, 21b) wirken und um eine vorbestimmte Strecke ($\Delta z$) vor dem Erreichen einer von der Aufnahme (13) abgewandten Endstellung ($z_0$) der bewegten Elemente ansprechen.

17. Vorrichtung nach Anspruch 16, dadurch gekennzeichnet, daß die Werkzeugwechsler (21a, 21b) mittels pneumatischer Kolben-Zylinder-Einheiten (22a, 22b) bewegt werden.

Fig. 1

Fig. 2

Fig. 3

EP 0 517 086 A2